# EUROPEAN PATENT SPECIFICATION

(11) **EP 1 978 347 B1**
(45) Date of publication and mention of the grant of the patent: **17.08.2011**
(21) Application number: 08161255.8
(22) Date of filing: 10.04.2006
(51) Int. Cl.: G01N 13/02

(54) **Method and Apparatus for Testing Solderability of Electrical Components**
Verfahren und Vorrichtung zum Testen der Lötbarkeit von elektrischen Bauteilen
Procédé et appareil de test de la soudabilité de composants électriques

(43) Date of publication of application: 08.10.2008
(62) Divisional of application: 06112413.7
(73) Proprietor: RESEARCH IN MOTION LIMITED, Waterloo, Ontario N2L 3W8 (CA)
(72) Inventor: Lahaie, Denis, Guelph, Ontario N1C 1C8 (CA); Christian, Beverley H., Waterloo, Ontario N2V 1X4 (CA)
(74) Representative: Rickard, David John

(56) References cited:
- EP-A- 1 236 991
- JP-A- 5 072 153
- JP-A- 7 072 064
- US-B1- 6 286 368
- US-B1- 6 612 161

## Description

The embodiments described herein relate generally to methods and apparatuses for testing the solderability of electrical components, such as surface mount components. In particular, the testing involves automated measurement of surface tension in the solder when contacted with a surface of the component.

Many small electronic components are mounted on Printed Circuit Boards (PCB) using surface mount technology (SMT). These SMT components are placed on the appropriate location on the PCB and are subsequently soldered to the PCB by known processes. In order to determine the likelihood of failure of the solder connection between the SMT component and the PCB, it is necessary to perform testing of the solderability of samples of the component.

Current instruments being used for solderability testing essentially include analytical balances with a built-in clock poised over molten solder. The SMT component is suspended from the bottom of the balance prior to testing.
The SMT component has flux applied to it and is dipped into the molten solder. The solder may be in a bath or formed as a small globule. The resulting surface tension of the molten solder wetting to the component is measured by the analytical balance over a period of time. The resulting measurements are used to plot a graph of the wetting force (i.e. the surface tension) versus time, which is then used to determine whether the component has suitable wetting properties for providing good solderability. In order for the quality of solderability of the component to be considered adequate, the sample component must wet quickly enough during the time that it is in contact with the molten solder and must exhibit a wetting force large enough to provide a suitably sized solder fillet in the completed solder joint.

Where the testing uses small solder globules, and as available solderability testing instrument pin sizes have decreased from a 4 mm diameter to 1 mm, the limitations of the testing arrangements described above make it difficult to accurately measure the wetting forces of the newest small components. This is in part because of the smaller amounts of solder required for the smaller pins.
The sensitivity of the equipment used to measure the wetting forces in such arrangements is inadequate for the smaller wetting forces required to be measured for the smaller SMT pin sizes. Some such arrangements have a smallest full scale division of force measurement in milliNewtons, which is inadequate to measure forces in the order of microNewtons. The newly developed small pin sizes and smaller solder amounts required for such pin sizes means that greater precision in force measurement is needed. However, when measuring such small forces, thermal currents in air at standard pressure may be high enough relative to the small wetting forces that unreliable results would be recorded or the test may be compromised.

Further, arrangements that rely on suspending a sample over molten solder before contacting the solder suffer from non-uniform heating of the component sample. As the heating in a real reflow oven in the normal assembly process is relatively uniform, it is desirable to mimic such conditions during the testing process, if possible. While the above described arrangements can suspend the component sample over the molten solder for a period of time to heat it prior to immersion in the solder, this generally does not result in uniform heating of the component sample.

JP07072064 discloses an apparatus for testing solderability of an electrical component in which the electrical component is held by an electronic balance acting as an external force detection means in the manner of a load sensor. A similar apparatus is disclosed by EP1236991. JP05072153 discloses an apparatus for evaluating the soldering performance of a cream solder. US6286368 discloses a load cell for suspending a specimen above a crucible containing a molten braze pool.

It is desired to address or ameliorate one or more shortcomings or disadvantages of prior methods and systems for testing the solderability of surface mount components, or to at least provide a useful alternative thereto.

### GENERAL

Embodiments described herein relate generally to methods and system for use in determining solderability of an electrical component. In one aspect there may be provided a system for measuring solderability of an electrical component, comprising: a vacuum chamber; a load sensor having a contact portion, the contact portion being disposed within the vacuum chamber; a first receptacle for containing solder; a platform or support disposed within the vacuum chamber in relation to the contact portion and having a component mounting surface for mounting the electrical component; an imaging device; and a control and communications module for causing relative movement between the platform or support and the load sensor so that a contact surface of the electrical component is brought into close proximity with the contact portion, whereby, when the contact portion has solder thereon and the solder is brought into contact with the contact surface, the load sensor measures force arising from wetting of the solder to the contact surface; wherein the control and communications module is configured to monitor sensed conditions within the system and to monitor images received from the imaging device. The force occurring under contact may change over time, depending on the degree of solderability of the electrical component. Thus, measurement of the wetting forces over time can provide an indication of the solderability of the electrical component.

Providing a vacuum chamber in which the solderability testing can be carried out may allow for minimization of thermal currents that might cause spurious results in the surface tension measurements. In one embodiment, a load sensor having a measurement accuracy similar to that of an atomic force microscope may be used. Such precision allows measurement of forces in the order of microNewtons.

In one embodiment, the system preferably has the first receptacle positioned on the platform. A first heating element is associated with the first receptacle for heating the solder in the first receptacle. A first temperature sensor is also provided for sensing a temperature of the solder in the first receptacle.

In another embodiment, the system further preferably comprises a second receptacle containing flux, the second receptacle being positioned on the platform. The first and second receptacles have, in one embodiment, closable openings arranged to be closed when the contact portion is not being dipped into the respective first or second receptacle. In another embodiment, a second heating element is disposed on the platform. The second heating element has an upper surface comprising the component mounting surface. The mounting member is disposed on or adjacent the component mounting surface. A second temperature sensor is provided for sensing a temperature of the second heating element.

In one embodiment, the load sensor preferably comprises a projection and the contact portion is disposed at a tip of the projection. The load sensor further comprises a third heating element disposed adjacent the contact portion. A cooling element may also be disposed around the projection distally of the contact portion. The projection comprises a downwardly pending pin of relatively small diameter, for example in the order of 0.5 mm or less. The platform is disposed below the contact portion of the projection. The contact portion is formed of a material that is electrically and thermally minimally - or non-conductive.

In one embodiment, the system preferably comprises a computer processor and a memory storing computer program instructions which, when executed by the computer processor, cause the computer processor to control operation of the load sensor and the control and communications module.

In one embodiment, the system preferably comprises a user interface to allow configuration of the solderability testing and initiation of a testing procedure. The system may also comprise an imaging device such as a camera. The output of the imaging device may be provided to at least one of: a display independent of the computer system; and a display of the computer system.

In one embodiment, the control and communications module may be configured to monitor at least one of: an internal pressure of the vacuum chamber; a platform position; and/or a sensed temperature.

In another aspect there may be provided a method for use in determining solderability of an electrical component in a system, comprising: mounting at least one electrical component to a component mounting surface within a vacuum chamber; applying flux to a contact portion of a load sensor, the contact portion being disposed within the vacuum chamber; creating a vacuum in the vacuum chamber; applying solder to the contact portion; causing relative movement between the at least one electrical component and the contact portion so that a respective electrical component is brought into close proximity with the contact portion and the solder contacts a contact surface of the electrical component; measuring by the load sensor force arising from wetting of the solder during contact with the contact surface; capturing images during testing using an imaging device; and monitoring sensed conditions within the system and images received from the imaging device.

At least one electrical component may comprise at least two electrical components. The method may further comprise performing the steps of applying flux, applying solder, causing relative movement and measuring for each electrical component. At least one electrical component may be disposed below the contact portion. The step of causing relative movement may comprise moving the at least one electrical component relative to the contact surface while the contact surface is held stationary. The step of applying flux may comprise moving a flux container containing flux relative to the contact portion to dip the contact portion into the flux container. The step of applying solder may comprise moving a solder container containing solder relative to the contact portion to dip the contact portion into the solder container. Each at least one electrical component may have a plurality of contact surfaces and the method further comprises performing the steps of applying flux, applying solder, causing relative movement and measuring for each contact surface.

The method may be used to measure the solderability of more than one electrical component and/or more than one surface of a component, in which case the steps of applying flux, applying solder, causing relative movement and measuring the surface tension are repeated for each electrical component and/or surface.

The at least one electrical component is preferably disposed below the contact portion. Further, the step of causing relative movement comprises moving the at least one electrical component relative to the contact surface while the contact surface is held stationary. The step of applying flux comprises moving a flux container containing flux relative to the contact portion to dip the contact portion into the flux container. The step of applying solder comprises moving a solder container containing solder relative to the contact portion to dip the contact portion into the solder container. In order to achieve the relative movement of the electrical component, the flux container and the solder container, each is mounted to a moveable platform within the vacuum chamber or a member supported by the platform.

The load sensor measurements may be uploaded from the load sensor to a computer processor in real time and recorded by the computer processor in memory.

The method may further comprise verifying that an appropriate amount of solder is suspended from tip portion of load sensor once tip portion has been dipped in solder container, using the imaging device.

The method may further comprise analyzing measured test data and generating one or more reports, wherein the reports comprise at least one of: at least one plot of the buoyancy and wetting forces as a function of time; and a summary of test conditions.

Yet another aspect may comprise a computer program product for use in determining solderability of an electrical component, the computer program product comprising computer program instructions which, when executed by computer processor of a computing system configured to control the system of the Invention, cause the computer processor to implement the method of the invention. Yet another aspect may comprise a control module for an apparatus described herein.

### BRIEF DESCRIPTION OF THE DRAWINGS

Embodiments are described in further detail below, by way of example only, with reference to the accompanying drawings, in which:
Figure 1 is a schematic front view of a solderability testing apparatus according to one embodiment;
Figure 2 is a block diagram of a system for testing solderability, including the apparatus of Figure 1; and
Figure 3 is a flow diagram of a method of measuring the solderability of electrical components.

### DESCRIPTION OF PREFERRED EMBODIMENTS

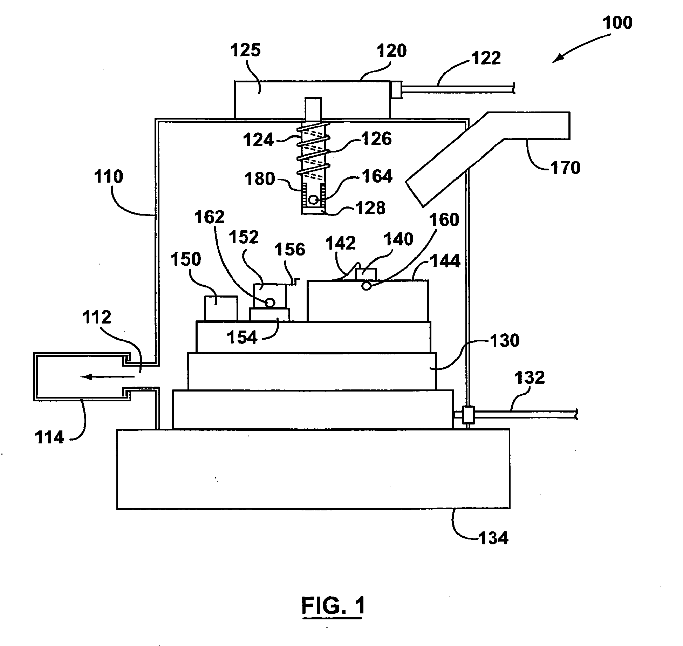

Referring now to Figure 1, there is shown a schematic front view of an example testing apparatus 100 for testing the solderability of electrical components 140, such as SMT components, by measuring wetting forces (i.e. surface tension) during contact of solder to the electrical components 140. The schematic of the apparatus shown in Figure 1 is not to scale and is provided for purposes of illustration only.

The testing apparatus 100 has a vacuum chamber 110 with a load sensor 120 mounted thereon and a support module platform 130 contained within the vacuum chamber 110. One or more electrical components 140 are mounted to, or otherwise held on, a heating element 144 that is situated on the platform 130. Also situated on platform 130 are a flux receptacle, such as flux container 150, and a solder receptacle, such as solder container 152. The vacuum chamber 110 also has an imaging device 170, such as a camera, directed to capture images during testing. The images can be viewed by the test supervisor to make positioning adjustments during testing, if necessary.

Vacuum chamber 110 is preferably formed as a cabinet and has an opening (not shown), such as a door, for receiving the electrical components and consumable materials, such as flux and solder. This opening must be closable and sealable so as to be air tight, but otherwise may take any suitable shape or form. Vacuum chamber 110 is supported by a vibration table 134 that is suitable for maintaining the vacuum chamber 110 motionless despite external vibrations or movements that would otherwise be transmitted through the structure supporting the vacuum chamber 110. Thus, the vibration table 134 prevents transmission of any such external vibrations or movements to the platform 130 and other parts in the vacuum chamber 110, thereby providing greater reliability of test results. The vibration table 134 may include a pneumatic vibration isolation system such as is commercially available.

Vacuum chamber 110 also comprises an outlet 112 through which air and other gases are withdrawn from the vacuum chamber 110 (when sealed). A vacuum pump 114 or other vacuum generating device is used to depressurize the internal volume of vacuum chamber 110 and thus create a vacuum therein. Vacuum chamber 110 is suitably sealed against inadvertent depressurization. Vacuum pump 114 may be a suitable commercially available roughing pump or roughing/diffusion pump system, for example. Vacuum pump 114 preferably has a pressure sensor associated therewith and a suitable input/output interface for external computer control of the vacuum pump 114. Alternatively, the vacuum pump may not interface with an external control device and may be manually operated by the test supervisor.

Moveable support platform 130 is positioned within vacuum chamber 110 and is movable inside the vacuum chamber 110 in three dimensions, along X, Y and Z axes. The movement of platform 130 is bounded by the confines of vacuum chamber 110 and is controlled by servo motors (not shown) in platform 130 that are driven by control signals received via control cable 132. Platform 130 may be any suitable commercially available XYZ stage with high resolution positioning in at least the vertical axis. Such resolution is at least of micrometer precision.

Flux container 150 may be supported directly by platform 130 or by a support member interposed between the flux container 150 and platform 130. Flux container 150 is preferably formed of steel and has a closeable opening at the top for allowing tip portion 128 of load sensor 120 to be dipped into flux contained in flux container 150. The closeable opening of the flux container 150 is preferably biased towards a closed position, for example by spring loading. Preferably, the closable opening is automatically opened by some form of mechanical actuation when tip portion 128 is positioned above flux container 150 and is brought within a predetermined vertical distance of the opening.

Solder container 152 is preferably positioned on a heating plate 154, which is situated on platform 130. Heating plate 154 preferably has a resistive heating element therein and is thermally insulated from platform 130. Alternatively, instead of heating element 154 being formed as a plate, it may be formed as a coil around the outside of solder container 152 or it may use an alternative heat source.

In order to sense the temperature of the solder in solder container 152, a temperature sensor 162, as such as a thermocouple, is positioned to take temperature measurements corresponding to the temperature of the solder in solder container 152. Instead of a thermocouple, the temperature can be measured using a thermal camera. Like flux container 150, solder container 152 has a closeable opening at its top which is biased towards a closed position but which is openable for dipping tip portion 128 into the solder. The closeable opening of solder container 152 is preferably opened automatically by a form of mechanical actuation when tip portion 128 is positioned above solder container 152 and approaches within a predetermined vertical distance of the opening. Solder container 152 preferably also has an automatic or mechanically actuable wiper 156 for removing dross from the top of the molten solder. The solder container 152 is preferably formed of tungsten. The heating plate may be formed of a suitable material for resistance heating, such as an iron-nickel-chromium alloy, a nickel-chromium alloy, Inconel^{™} or Kanthal^{™}.

Heating element 144 may be of any suitable commercially available type having a relatively small surface area (but relatively large compared to the electronic components) and with good spatial temperature control so as to provide even heating across the surface that supports the electrical components. Heating element 144 may have a temperature sensing device 160, such as a thermocouple, integrally formed therein or separately formed but appropriately positioned so as to sense a temperature of the upper surface of heating element 144 to which the electrical components 140 are secured or mounted.
Temperature sensing device 160 may alternatively employ a thermal imaging camera.

Each electrical component 140 is secured to the top surface of heating element 144. This surface may be used as the mounting surface for mounting only a single electronic component 140 or it may be used to mount a number of electronic components 140 in series, for example in the order of ten or so. Each electronic component 140 is secured to the mounting surface of heating element 144 by a mounting member 142, which may be in the form of a clip, arm, bracket or other mechanical means for securing the electrical component 140 against inadvertent movement on the mounting surface during the testing. Alternatively, other means may be used to secure the electrical components 140 to the mounting surface, such as suction, adhesion or magnetic attraction.

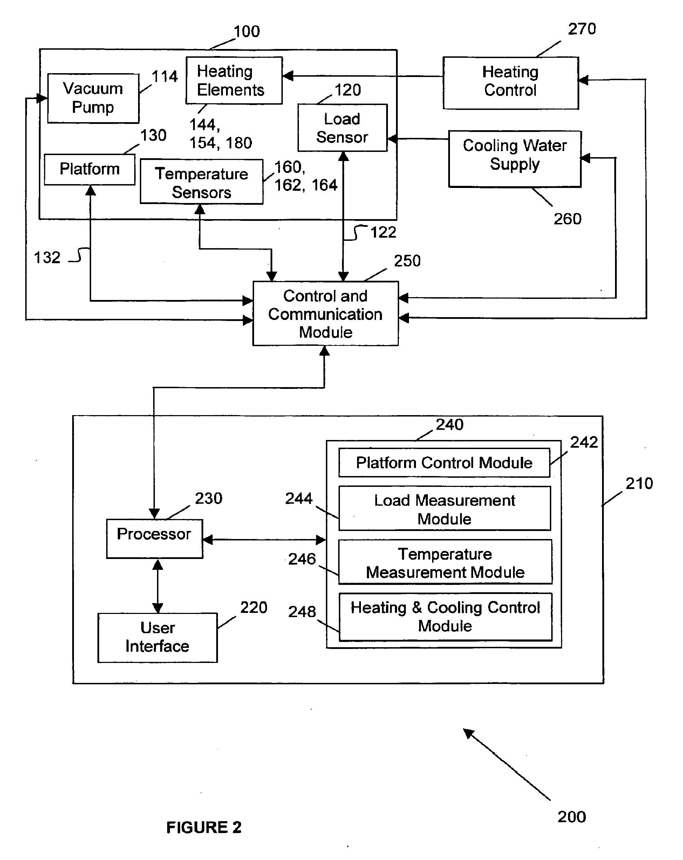

Load sensor 120 is of a suitable commercially available type having microNewton measurement accuracy, such as an atomic force microscope (AFM), for example. Load sensor 120 is positioned on top of the vacuum chamber 110 so as to reside partly outside of the vacuum chamber 110 and partially within the vacuum chamber 110. Load sensor 120 has a downwardly projecting pin 124 that is disposed mostly within the vacuum chamber 110 but is connected to a measurement and control portion 125 that is positioned outside of the vacuum chamber 110. Pin 124 is used to measure the wetting forces during testing. The forces exerted on pin 124 are sensed by known elements within the measurement and control portion 125. Load sensor 120 communicates with an external computer system 210 (shown in Figure 2 and described in further detail below) via a suitable communications cable 122. In an alternative embodiment, load sensor 120 may be located entirely with vacuum chamber 110.

Pin 124 is preferably formed of a material that is non-conductive electrically and thermally. Pin 124 is preferably formed of alumina. Alternatively, pin 124 may be formed of a silicon carbide, silicon nitride or zirconia. Pin 124 may be approximately cylindrical or may have an alternative elongate shape with a small thickness or diameter. The diameter of pin 124 may be about 0.5 mm, for example.

Pin 124 may have a cooling coil 126 disposed along a portion of pin 124 proximally of contact tip portion 128. Pin 124 preferably also has a third heating element 180 for resistive heating of tip portion 128. Because tip portion 128 needs to be heated to a relatively high temperature by heating element 180, cooling element 126 is used to reduce heat conduction to the measurement and control portion 125 of load sensor 120.

Tip portion 128 is preferably formed of iron. The heating element 180 may be formed of an iron nickel chromium alloy. Alternatively the resistance heating element 180 may be formed of a nickel chromium alloy, Inconel^{™} or Kanthal^{™}. The downwardly facing surface of tip portion 128 is that which is fluxed and dipped in solder container 152 and is of a sufficient dimension to retain a small but appropriately sized and cohesive globule of solder thereon through surface tension, despite the pull of gravity.

A temperature sensor 164 is positioned toward the end of pin 124, adjacent to portion 128 and distal (i.e. toward the tip) of cooling element 126. Temperature sensor 164 is positioned to sense the temperature of tip portion 128. For this purpose, a thermocouple may be used or, alternatively, a thermal imaging camera may be used. The temperature sensors 160, 162 and 164 shown in Figure 1 are thermocouples and are preferably of type T or K with a linear response in the 0 to 300° Celsius range. If thermal imaging cameras are used, these will not be positioned as indicated by the reference indicators in Figure 1 or temperature sensors 160, 162 and 164, but will instead be positioned away from, but directed toward, the location at which it is desired to sense the temperature. Such thermal imaging cameras may be mounted on an interior wall of the vacuum chamber, for example, and trained on their respective points of interest.

Referring also to Figure 2, there is shown a system 200 for testing the solderability of electrical components 140. System 200 includes the apparatus 100 and a computer system 210 for controlling the apparatus 100 to perform the solderability testing. System 200 further comprises a control and communication module 250 for enabling computer system 210 to provide control signals to components within apparatus 100 and to receive output signals from those components where appropriate. Control and communication module 250 also performs analog - to - digital and digital - to - analog conversion functions, where appropriate. System 200 further comprises a cooling water supply 260 and a heating control module or circuit 270. Cooling water supply 260 provides cooling water to cooling element 126 in load sensor 120 and heating control module 270 controls power to heating elements 144, 154 and 180.

Computer system 210 comprises a user interface 220 to allow a supervisor of the solderability testing to configure and initiate the testing procedure. Computer system 210 also comprises a processor 230 in communication with the user interface 220 and a memory 240 accessible to processor 230. Memory 240 stores computer program instructions which make up software modules used by system 200 during the solderability testing procedure. Such software modules include, for example, a platform control module 242, a load measurement module 244, a temperature measurement module 246 and a heating and cooling control module 248. Processor 230 accesses the computer program instructions of each of the software modules in memory 240 and executes the instructions as appropriate, including, for example, transmitting control instructions to control and communication module 250 to operate the various elements within apparatus 100.

Sensed conditions within apparatus 100, for example such as the internal pressure of the vacuum chamber 110, the platform position, the sensed temperatures, and optionally the images being received at camera 170, are monitored by processor 230 via control and communication module 250. Such sensed conditions are used by the software modules to ensure that the testing procedure is being carried out according to preconfigured testing parameters.
The output of camera 170 may be provided directly to a display independent of computer system 210 or it may be provided to a suitable image processor within computer system 210 for display via user interface 220.

User interface 220 may include any suitable interface means, such as a display, keyboard and mouse. One or more of the software modules stored in memory 240 may include existing software applications, for example such as those which may be provided with the purchase of elements in apparatus 100.
For example, load sensor 120 may have appropriate software that is commercially available with purchase of load sensor 120 and which may constitute the load measurement module 244. Additionally, platform control module 242 may comprise software provided by the maker of platform 130 and specifically tailored for control of platform 130. Other of the software modules stored in memory 240 may include routines developed in an appropriate commercially available software application for control and measurement purposes, such as LabVIEW^{™} available from National Instruments.

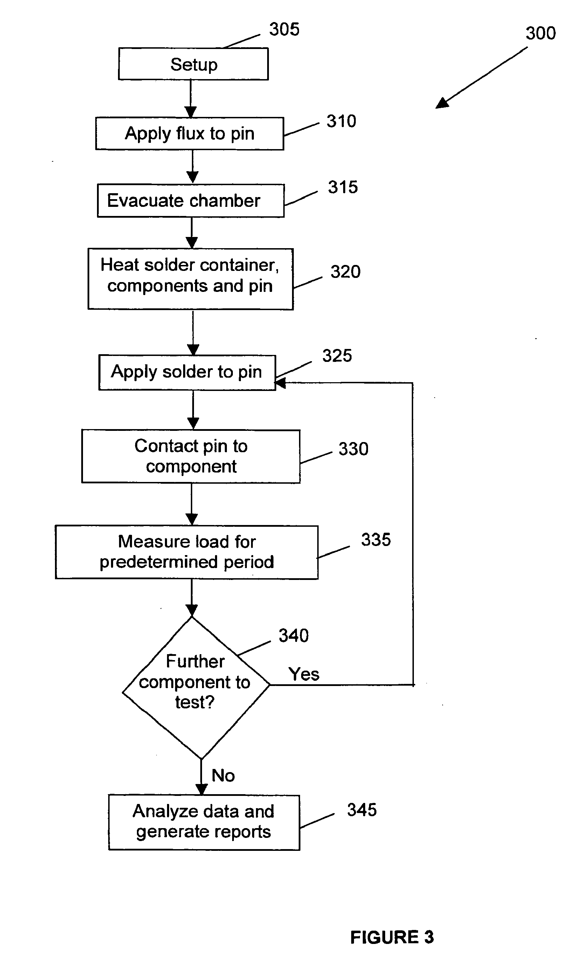

Referring now to Figure 3, a method 300 of testing the solderability of electrical components is described in further detail. Method 300 begins at step 305 with a set up procedure. In the set up procedure, the vacuum chamber 110 is not sealed and its opening may be open. During the set up procedure, the flux container 150 is filled with flux if required and the solder container 152 is filled with a suitable volume of solid solder, if required. One or more electrical components 140 are positioned on the mounting surface of heating element 144 and the electrical components 140 are fixed in place using the mounting members 142 or alternative means of securement. When the electrical components 140 are secured on the mounting surface, they are placed so as to have their test surfaces in a horizontal position and face up. The mounting members 142 should be positioned so as not to obstruct contact between the testing surfaces of the electrical components 140 and the contact tip portion 128 during testing.

Set up step 305 may also include verifying the operational status of each of the components of apparatus 100. For example, the operability of vacuum pump 114 may be checked, along with the operational status of the other sensing and control elements in apparatus 100, such as platform 130, camera 170, load sensor 120, the heating elements 144, 154 and 180 and the temperature sensors 160, 162 and 164.

Once the set up procedure is complete, the opening of vacuum chamber 110 is closed and flux is applied to pin 124, at step 310. In order to apply flux to pin 124, platform 130 is moved according to control signals received through cable 132 so as to position flux container 150 beneath tip portion 128 and platform 130 is then slowly raised so as to dip tip portion 128 into flux container 150 and immerse it in flux. Tip portion 128 is then withdrawn from flux container 150 by lowering platform 130 and the opening of flux container 150 is closed in order to prevent evaporation of the flux. Preferably, about 2.5 mm of the pin 124 is lowered into the flux container 150.

At step 315, vacuum chamber 110 is sealed and evacuated through outlet 112 by vacuum pump 114. Vacuum pump 114 depressurizes the vacuum chamber 110 so as to reduce the pressure within vacuum chamber 110 to a predetermined pressure level of about 0.01 torr, for example. The pressure inside vacuum chamber 110 should be low enough that thermal conduction currents are negligible, but the higher the pressure that can be tolerated, the better. The higher the pressure that can be tolerated, the fewer practical difficulties are encountered with maintaining the vacuum conditions.

At step 320, following evacuation of vacuum chamber 110, solder container 152 is heated by heating element 154 to ensure that the solder therein is in a molten state. If necessary, wiper 156 is used to wipe the dross from the top of the molten solder once it has melted. While the solder is melted, heating elements 144 and 180 are used to heat the electrical components 140 and tip portion 128, respectively.

Once the solder, the electrical components 140 and the tip portion 128 are all heated to the desired degree, as sensed by respective temperature sensors 162, 160 and 164, solder is applied to tip portion 128 of pin 124. The electrical components 140 should be heated to about 100 degrees Celsius, while the solder and tip portion 128 should be heated to temperatures above the melting point of the solder, which may vary according to the type of solder.

Application of solder to tip portion 128 is done by moving platform 130 so as to position solder container 152 beneath tip portion 128 and then raising platform 130 so as to immerse tip portion 128 in solder container 152 by about 2.5 mm. During or prior to solder container 152 being raised towards tip portion 128, its top opening is opened and, once tip portion 128 is withdrawn, the opening is again closed. Once solder has been applied to the tip portion 128 and platform 130 has been lowered to withdraw tip portion 128 from solder container 152, camera 170 may be used to visually verify that an appropriate amount of solder is suspended from tip portion 128. Signals from load sensor 120 may also be used to verify that an appropriate amount of solder is suspended from tip portion 128.

At step 330, platform 130 is again moved relative to pin 124 so as to bring a testing surface of electrical component 140 into contact with the globule of solder suspended from tip portion 128. This contact is achieved slowly and with great precision. Once load sensor 120 detects the exertion of a wetting force brought about by contact of the solder on tip portion 128 with a test surface of electrical component 140, a signal is sent by load sensor 120 to processor 230 via cable 122 and processor 230 then instructs platform 130 (via cable 132) to cease movement. The load sensor may wait until it detects force above a predetermined threshold before causing the platform 130 to stop.

Once platform 130 has stopped moving electrical component 140 towards tip portion 128, load sensor 120 measures the forces exerted on pin 124 by surface tension resulting from the wetting of the solder to the test surface of electrical component 140. The wetting forces are measured for a predetermined period of time, for example such as 5 to 20 seconds or until the forces reach an equilibrium, depending on the sample being tested, and the measurements are uploaded from load sensor 120 to processor 230 in real time and recorded by processor 230 in memory 240. Contact of the solder on pin 124 with the electrical component should be made in such a way as to avoid the solder sliding off tip portion 128. Otherwise, the value of the test data will be minimal.

At step 340, processor 230 may determine that, according to the preconfigured testing procedure, there are further electrical components 140 on the mounting surface that remain to be tested or the same electrical component 140 has a further surface to be tested. Alternatively, this determination may be made by the test supervisor. Either way, steps 325 to 335 are repeated for each such further electrical component 140 or surface. Once testing has been performed on all electrical components 140 on the mounting surface and all component surfaces, processor 230 analyzes the measured test data and generates one or more reports, at step 345, for presentation to the test supervisor. Such reports may include, for example, plots of the buoyancy and wetting forces as a function of time and a summary of the test conditions.

While method 300 is preferably performed in the order of the steps described above, alternative embodiments may reverse the order of some of the steps. For example, the order of steps 315 and 320 may be reversed.

It should be understood that a reference herein to a test surface of an electrical component includes conductive pads and other forms of electrical terminations or leads. Further, while reference is made herein to SMT components as one form of electrical component, it should be understood that other kinds of electrical components that rely on solder to form electrical connections on current boards may be the subject of testing using the described embodiments.

## Claims

1. A system (200) for measuring solderability of an electrical component (140), comprising:
a vacuum chamber (110);
a load sensor (120) having a contact portion (128), the contact portion (128) being disposed within the vacuum chamber (110);
a first receptacle (152) for containing solder;
a platform or support (130) disposed within the vacuum chamber (110) in relation to the contact portion (128) and having a component mounting surface for mounting the electrical component (140);
an imaging device (170); and
a control and communications module (250) for
causing relative movement between the platform or support (130) and the load sensor (120) so that a contact surface of the electrical component (140) is brought into close proximity with the contact portion (128), whereby, when the contact portion (128) has solder thereon and the solder is brought into contact with the contact surface, the load sensor (120) measures force arising from wetting of the solder to the contact surface;
wherein the control and communications module (250) is configured to monitor sensed conditions within the system (200) and to monitor images received from the imaging device (170).

2. The system of claim 1, further comprising a computer processor (230).

3. The system of claim 2, further comprising a memory (240) storing computer program instructions (242, 244) which, when executed by the computer processor (230), cause the computer processor (230) to control operation of the load sensor (120) and the control and communications module (250).

4. The system of any one of claims 1 to 3, further comprising a user interface (220) to allow configuration of the solderability testing and initiation of a testing procedure.

5. The system of any preceding claim, wherein the imaging device (170) comprises a camera.

6. The system of any preceding claim, further comprising a computer system (210), wherein output of the imaging device (170) is provided to at least one of:
a display independent of the computer system (210); and
a display of the computer system (210).

7. The system of any one of the preceding claims, wherein the control and communications module (250) is configured to monitor at least one of:
an internal pressure of the vacuum chamber;
a platform position;
a sensed temperature.

8. A method (300) for use in determining solderability of an electrical component (140) in a system (200), comprising:
mounting (305) at least one electrical component (140) to a component mounting surface within a vacuum chamber (110);
applying (310) flux to a contact portion (128) of a load sensor (120),
the contact portion (128) being disposed within the vacuum chamber (110);
creating (315) a vacuum in the vacuum chamber (110);
applying (325) solder to the contact portion (128);
causing relative movement (330) between the at least one electrical component (140) and the contact portion (128) so that a respective electrical component (140) is brought into close proximity with the contact portion (128) and the solder contacts a contact surface of the electrical component (140);
measuring (335) by the load sensor (120) force arising from wetting of the solder during contact with the contact surface;
capturing images during testing using an imaging device (170); and
monitoring sensed conditions within the system (200) and images received from the imaging device (170).

9. The method of claim 8, wherein load sensor measurements are uploaded from the load sensor (120) to a computer processor (230) in real time and recorded by the computer processor (230) in memory (240).

10. The method of claim 8 or 9, further comprising:
verifying that an appropriate amount of solder is suspended from tip portion (128) of load sensor (120) once tip portion (128) has been dipped in solder container (152), using the imaging device (170).

11. The method of any one of claims 8 to 10, further comprising analyzing measured test data and generating one or more reports, wherein the reports comprise at least one of:
at least one plot of the buoyancy and wetting forces as a function of time; and
a summary of test conditions.

12. A computer program product for use in determining solderability of an electrical component (140), the computer program product comprising computer program instructions (242, 244) which, when executed by computer processor (230) of a computing system (210) configured to control the system of any one of claims 1 to 7, cause the computer processor (230) to implement the method of any one of claims 8 to 11.

## Revendications

1. Un système (200) pour mesurer la soudabilité d'un composant électrique (140), comprenant :
une chambre à vide (110) ;
un détecteur de charge (120) doté d'une portion de contact (128), la portion de contact (128) étant située au sein de la chambre à vide (110) ;
un premier récipient (152) pour contenir le métal d'apport ;
une plate-forme ou support (130) disposée au sein de la chambre à vide (110) par rapport à la portion de contact (128), et possédant une surface de montage de composants sur laquelle est monté le composant électrique (140) ;
un dispositif d'imagerie (170) ; et
un module de commande et de communications (250) pour
déterminer un mouvement relatif entre la plate-forme ou support (130) et le détecteur de charge (120), de sorte qu'une surface de contact du composant électrique (140) est placée tout près de la portion de contact (128), de telle façon que lorsque du métal d'apport a été placé sur la portion de contact (128), et le métal d'apport est amené au contact de la surface de contact, le détecteur de charge (120) mesure la force découlant du mouillage du métal d'apport sur la surface de contact ;
dans lequel le module de commande et de communications (250) est configuré pour contrôler les conditions détectées au sein du système (200), et pour contrôler les images reçues du dispositif d'imagerie (170).

2. Le système conforme à la revendication 1, comprenant également un processeur informatisé (230).

3. Le système conforme à la revendication 2, comprenant également une mémoire (240) assurant le stockage des instructions du programme informatique (242, 244) qui, lorsqu'elles sont exécutées par le processeur informatisé (230), déterminent la commande, par le processeur informatisé (230), de l'utilisation du détecteur de charge (120) ainsi que du module de commande et de communications (250).

4. Le système conforme à une quelconque des revendications 1 à 3, comprenant également une interface utilisateur (220) permettant la configuration des essais de soudabilité et le lancement d'une procédure d'essai.

5. Le système conforme à une quelconque des revendications précédentes, dans lequel le dispositif d'imagerie (170) comprend une caméra.

6. Le système conforme à une quelconque des revendications précédentes comprenant également un système informatisé (210) au sein duquel les images produites par le dispositif d'imagerie (170) sont transmises au minimum à un des dispositifs suivants :
un écran d'affichage indépendant du système informatisé (210) ; et
un écran d'affichage propre au système informatisé (210).

7. Le système conforme à une quelconque des revendications précédentes, dans lequel le module de commande et de communications (250) est configuré pour contrôler au minimum un des suivants :
une pression interne de la chambre à vide ;
une position de la plate-forme ;
une température relevée.

8. Une méthode (300) utilisée pour la détermination de la soudabilité d'un composant électrique (140) dans un système (200), comprenant :
le montage (305) d'au moins un composant électrique (140) sur la surface de montage d'un composant dans une chambre à vide (110) ;
l'application d'un flux (310) sur une partie de contact (128) d'un détecteur de charge (120), la partie de contact (128) étant disposée au sein de la chambre à vide (110) ;
la création (315) d'un vide dans la chambre à vide (110) ;
l'application (325) de métal d'apport sur la partie de contact (128) ;
en donnant lieu ainsi à un mouvement relatif (330) entre au moins le composant électrique (140) et la partie de contact (128), de sorte qu'un composant électrique (140) correspondant soit approché de très près de la partie de contact (128), et que le métal d'apport entre en contact avec une surface de contact du composant électrique (140) ;
la mesure (335), par le détecteur de charge (120), de la force découlant du mouillage du métal d'apport au cours du contact avec la surface de contact ;
la saisie d'images au cours d'essais à l'aide d'un dispositif d'imagerie (170) ; et le contrôle de l'état détecté au sein du système (200) et des images reçues du dispositif d'imagerie (170).

9. La méthode conforme à la revendication 8, dans laquelle les mesures du détecteur de charge sont téléchargées du détecteur de charge (120) dans un processeur informatisé (230) en temps réel, et enregistrées par le processeur informatisé (230) dans la mémoire (240).

10. La méthode conforme aux revendications 8 ou 9, comprenant également la vérification qu'une quantité appropriée de métal d'apport est suspendue au bout (128) du détecteur de charge (120), lorsque le bout (128) a été trempé dans un conteneur de métal d'apport (152), en utilisant le dispositif d'imagerie (170).

11. La méthode conforme à une quelconque des revendications 8 à 10, comprenant également l'analyse de données d'essai mesurées et la production d'un ou plusieurs rapports, ces rapports comprenant au moins
un tracé de la flottabilité et des forces de mouillage en fonction du temps ; et
un résumé des conditions d'essai.

12. Un programme d'ordinateur servant à déterminer la soudabilité d'un composant électrique (140), le programme d'ordinateur comprenant des instructions de programme d'ordinateur (242, 244) qui, lorsqu'elles sont exécutées par le processeur informatisé (230) d'un système de calcul (210) configuré pour contrôler le système d'une quelconque des revendications 1 à 7 détermine l'exécution par le processeur informatisé (230) de la méthode d'une quelconque des revendications 8 à 11.

## Patentansprüche

1. System (200) zum Messen der Lötbarkeit einer elektrischen Komponente (140), umfassend;
eine Vakuumkammer (110);
einen Lastsensor (120), der einen Kontaktabschnitt (128) aufweist, wobei der Kontaktabschnitt (128) innerhalb der Vakuumkammer (110) angeordnet ist;
einen ersten Behälter (152) zum Aufnehmen von Löt;
eine Plattform oder einen Träger (130), der innerhalb der Vakuumkammer (110) mit Bezug auf den Kontaktabschnitt (128) angeordnet ist und eine Komponentenmontierfläche zum Montieren der elektrischen Komponente (140) aufweist;
ein abbildendes Gerät (170); und
ein Regulier- und Kommunikationsmodul (250) zum
Verursachen einer relativen Bewegung zwischen der Plattform oder dem Träger (130) und dem Lastsensor (120), so dass eine Kontaktfläche der elektrischen Komponente (140) in nächste Nähe zum Kontaktabschnitt (128) gebracht wird, wodurch, wenn sich Löt auf dem Kontaktabschnitt (128) befindet und der Löt in Kontakt mit der Kontaktfläche gebracht wird, der Lastsensor (120) die Kraft misst, die vom Benetzen der Kontaktfläche mit dem Löt verursacht wird;
wobei das Regel- und Kommunikationsmodul (250) konfiguriert ist, um abgetastete Zustände innerhalb des Systems (200) und Bilder zu überwachen, die von dem abbildenden Gerät (170) empfangen werden.

2. System nach Anspruch 1, des Weiteren einen Computerprozessor (230) umfassend.

3. System nach Anspruch 2, des Weiteren einen Speicher (240) umfassend, der der Computerprogrammanweisungen (242, 244) speichert, die, werden sie von Computerprozessor (230) ausgeführt, den Computerprozessor (230) veranlassen, den Arbeitsvorgang des Lastsensors (120) und des Regulier- und Kommunikationsmodul (250) zu regulieren.

4. System nach einem der Ansprüche 1 bis 3, des Weiteren eine Benutzerschnittstelle (220) umfassend, um die Konfiguration des Testens der Lötbarkeit und das Initiieren eines Testvorgangs zu gestatten.

5. System nach einem der vorhergehenden Ansprüche, wobei das abbildende Gerät (170) eine Kamera umfasst.

6. System nach einem der vorhergehenden Ansprüche, des Weiteren ein Computersystem (210) umfassend, wobei die Ausgabe des abbildenden Geräts (170) an mindestens eines bereitgestellt ist von:
einer Anzeige, die vom Computersystem (210) unabhängig ist; und
einer Anzeige des Computersystems (210).

7. System nach einem der vorhergehenden Ansprüche, wobei das Regulier- und Kommunikationsmodul (250) konfiguriert ist, um mindestens eines zu überwachen von:
einem Innendruck der Vakuumkammer;
einer Plattformposition;
einer abgetasteten Temperatur.

8. Verfahren (300) zur Verwendung beim Bestimmen der Lötbarkeit einer elektrischen Komponente (140) in einem System (200) umfassend:
das Montieren (305) mindestens einer elektrischen Komponente (140) an eine Komponentenmontierfläche innerhalb einer Vakuumkammer (110);
das Aufbringen (310) eines Flussmittels auf einen Kontaktabschnitt (128) eines Lastsensors (120), wobei der Kontaktabschnitt (128) sich innerhalb der Vakuumkammer (110) befindet;
das Bilden (315) eines Vakuums in der Vakuumkammer (110);
das Aufbringen (325) von Löt auf den Kontaktabschnitt (128);
das Verursachen einer relativen Bewegung (330) zwischen der mindestens einen elektrischen Komponente (140) und dem Kontaktabschnitt (128), so dass eine jeweilige elektrische Komponente (140) in nächste Nähe zu dem Kontaktabschnitt (128) gebracht wird und der Löt eine Kontaktfläche der elektrischen Komponente (140) kontaktiert;
das Messen (335) durch den Lastsensor (120) der Kraft, die durch das Benetzen des Löts während des Kontakts mit der Kontaktfläche entsteht;
das Auffangen von Bildern während des Tests unter Anwendung eines abbildenden Geräts (170); und das Überwachen von abgetasteten Bedingungen innerhalb des Systems (200) und der Bilder, die von dem abbildenden Gerät (170) empfangen werden.

9. Verfahren nach Anspruch 8, wobei Lastsensormesswerte aus dem Lastsensor (120) zu einem Computerprozessor (230) in Echtzeit hochgeladen und im Speicher (240) durch den Computerprozessor (230) aufgezeichnet werden.

10. Verfahren nach Anspruch 8 oder 9, des Weiteren umfassend:
das Verifizieren, dass eine richtige Menge Löt aus dem Spitzenabschnitt (128) des Lastsensors (120 suspendiert wird, sobald der Spitzenabschnitt (128) in den Lötbehälter (152) eingetaucht worden ist, unter Anwendung des abbildenden Geräts (170).

11. Verfahren nach einem der Ansprüche 8 bis 10, des Weiteren das Analysieren gemessener Testdaten und das Erzeugen eines oder mehrerer Berichte umfassend, wobei die Berichte mindestens eines umfassen von:
mindestens einem Diagramm der Tragkraft und Benetzungskräfte in Abhängigkeit von der Zeit; und
einer Zusammenfassung der Testbedingungen.

12. Computerprogrammprodukt zur Verwendung beim Bestimmen der Lötbarkeit einer elektrischen Komponente (140), wobei das Computerprogrammprodukt Computerprogrammanweisungen (242, 244) umfasst, die, werden sie vom Computerprozessor (230) eines Computiersystems (210) ausgeführt, das konfiguriert ist, um das System nach einem der Ansprüche 1 bis 7 zu regulieren, den Computerprozessor (230) dazu bringen, das Verfahren nach einem der Ansprüche 8 bis 11 durchzuführen.
